# EUROPEAN PATENT APPLICATION

(11) **EP 2 244 508 A1**
(43) Date of publication of application: **27.10.2010**
(21) Application number: 09447016.8
(22) Date of filing: 23.04.2009
(51) Int. Cl.: H04W 52/02

(54) **A method for activating power save in a femtocell**

(71) Applicant: Thomson Telecom Belgium, 2650 Edegem (BE)
(72) Inventor: Claes, Stan, 2830 Willebroek (BE); Moore, Trevor, 2440 Geel (BE); Yoshizawa, Takahito, 2850 Boom (BE)
(74) Representative: Berthier, Karine

(57) **Abstract**

The present invention concerns a femtocell, a home gateway comprising a femtocell and method for activating and deactivating a first network, the method for activating comprising the steps of detecting a mobile handset reselecting from a first macrocell to a second macrocell, identifying that the mobile handset has been registered to a first network that is located in the second macrocell and activating the first network.

## Description

### FIELD OF THE INVENTION

The present invention relates generally to a femtocell access point and in particular to femtocell power saving.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A macrocell is a cell in a mobile phone network that provides radio coverage served by a cellular base station, namely a NodeB in a universal mobile telecommunication system (UMTS) network. It is adapted to connect cellular handsets to a mobile network. The area covered by a base station is called a cell. When a cellular handset is located in a cell, it can connect to the base station. A location area is a set of base stations that are grouped to optimize signaling. Each location area comprises one or more network cells.

A femtocell, also called an access point base station or a Home Node B, is a cellular base station. From a mobile handset, it is functionally similar to a macrocell cellular base station. A femtocell is adapted to cover a much lower cell range than a macrocell. The cell size covered by a femtocell is called a pico cell hereinafter. A typical use of a femtocell is inside a building to cover areas that are not reached by a macrocell. A cellular service operator provides a plurality of macrocells and femtocells. The femtocell is usually connected to the service provider network through a broadband connection. The pico cell may also be called a femtocell hereinafter.

In typical deployments, the right to connect to the network via a femtocell is limited to a small number of handsets specifically nominated by the owner of the femtocell. The femtocell dissipates of the order 10 Watts of thermal power in operation, largely due to inefficiencies in radio frequency power amplification and significant computing resources involved in implementing the transceiver. Power is consumed even if there are no active calls in progress. For many end users, the femtocell is only actively used for relatively short periods of the day. Keeping the femtocell activated continuously is wasteful of energy. However, it would be very inconvenient for the user to have to manually activate the femtocell whenever he enters and leaves his home.

### SUMMARY OF THE INVENTION

The present invention attempts to remedy at least some of the concerns connected with femtocell power consumption in the prior art, by providing a method for automatically activating and deactivating a femtocell.

The present invention concerns a method for activating a first network comprising the steps of detecting a mobile handset reselecting from a first macrocell to a second macrocell, identifying that the mobile handset has been registered to a first network that is located in the second macrocell and activating the first network.

According to an embodiment, the first network is a femtocell.

According to an embodiment, the method comprises the step of activating at least a function of a home gateway to which the femtocell is connected.

The present invention also concerns a method for deactivating a first network comprising the steps of detecting a mobile handset reselecting from a first macrocell to a second macrocell, identifying that the mobile handset has been registered to a first network that is located in the first macrocell and deactivating the first network.

According to an embodiment, the first network is a femtocell.

According to an embodiment, the method comprises the step of deactivating at least a function of a home gateway to which the femtocell is connected.

Another object of the invention is a Femtocell comprising power control means for activating the femtocell on reception of an instruction from a femtocell gateway, when a mobile handset enters the macrocell to which the femtocell has been registered.

According to an embodiment, the power control means deactivates the femtocell on reception of an instruction from a femtocell gateway, when a mobile handset leaves the macrocell to which the femtocell has been registered.

Another object of the invention is a Home Gateway device comprising a femtocell module, the gateway comprising a power control means for activating a set of functions on reception of an instruction from a femtocell gateway, when a mobile handset enters the macrocell to which the femtocell has been registered.

According to an embodiment, the set of functions being configurable per mobile handset registered to the femtocell.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 illustrates a system compliant with the embodiment;
- Figure 2 is a second illustration of a system compliant with the embodiment;
- Figure 3 is a third illustration of a system compliant with the embodiment;
- Figure 4 is a block diagram of a femtocell device according to the embodiment;
- Figure 5 is a flow chart of a method compliant with the embodiment.

In the Figures, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

The exemplary embodiment comes within the framework of femtocell located in a macrocell, but the invention is not limited to this particular environment and may be applied within other frameworks where a local network is located in a large network.

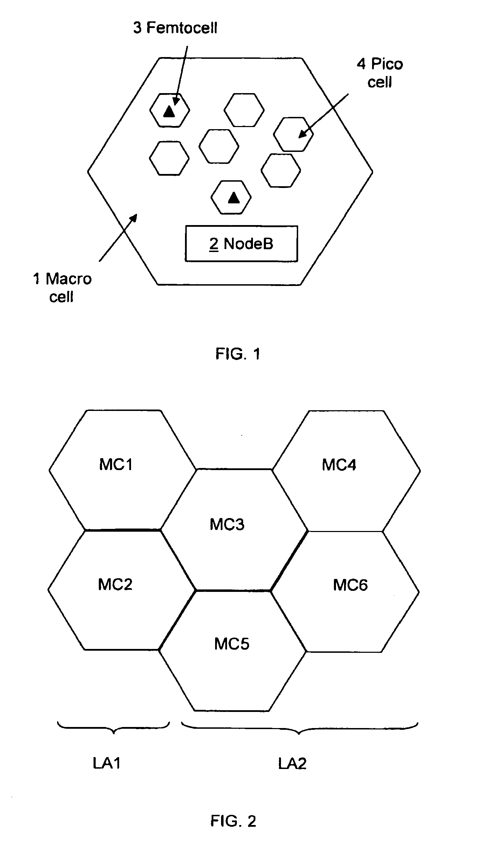

The system according to the embodiment is compliant with the third generation cell phone networks. In particular it is compliant with the UMTS network. A macrocell is represented in figure 1. It provides radio coverage served by the NodeB 2. Several femtocells 3 are located inside the macrocell 1. Each femtocell covers a cell called a pico cell 4.

Figure 2 illustrates several macrocells, MC1 to MC6. The macrocells MC1 and MC2 are part of the location area LA1. The macrocells MC3 to MC6 are part of the location area LA2.

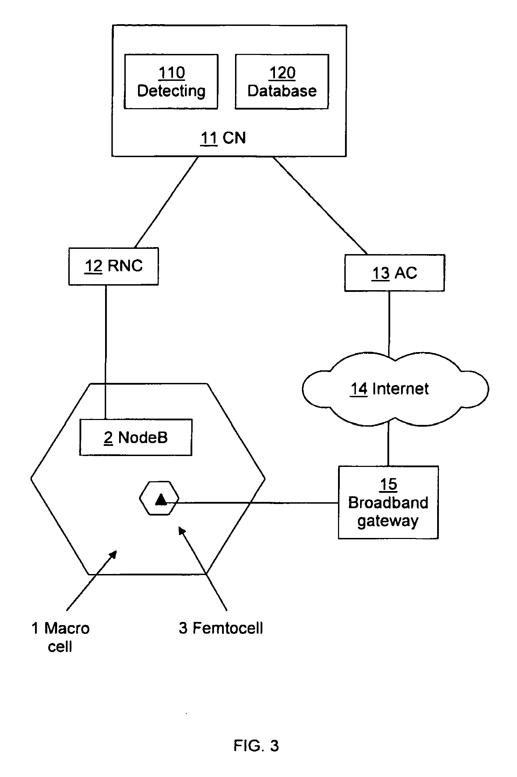

As indicated in figure 3, each NodeB 2 is controlled by a radio network controller 12 (RNC). The RNC is adapted to perform radio resource management and mobility management. The system also comprises a mobile Core Network 11 (CN) that is, among others, adapted to handle end users mobility and handover. The CN performs the mobility management. It keeps track of the location of the handset based on the Location Area which comprises one or more cells that cover a certain geographical area. In particular the CN might be a Mobile Switching Center.

The system of the embodiment comprises an Access Concentrator 13 (AC) that aggregates traffic from a large number of femtocells located in a given geographic area. The AC manages a large number of femtocells and provides a standard interface to the core network from the radio access network. The AC does the equivalent functionalities of RNC such as call processing, radio resource management, mobility management, and handover control. The AC is also called a femtocell gateway. Each femtocell is connected to a broadband gateway 15, also called a residential gateway or home gateway. The AC accesses the femtocell through the Internet 14.

The NodeB, the CN and the RNC are compliant with the standard UMTS architecture, and are not further detailed hereinafter. The AC is also compliant with standards femtocell architecture and is not further detailed hereinafter.

The specificities of the CN and the AC according to the embodiment are further detailed herein below. The CN comprises a detection module 110 that is adapted to allow the CN to detect when a handset has entered its home location area. The home location area is recorded in a database when the femtocell is first installed or purchased. The database 120 is located in the CN. Alternatively, the database is located in another network equipment that is accessible by the CN.

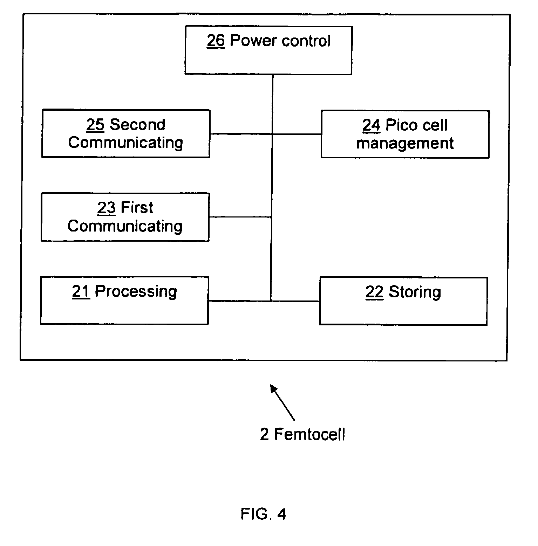

The femtocell device is represented in figure 4. It comprises a first communicating module 23 for emitting and receiving in the UMTS network. A femtocell management module 24 is adapted to perform the management and control functions of a femtocell in a pico cell. It comprises a second communicating module 25 for emitting and receiving in the broadband network. In the embodiment, the broadband network is of digital subscriber line technology. Of course it could also be any other type of broadband connection, such as a cable modem, fiber optics or satellite modem. It also comprises storing module 22 such as a memory for storing among others the femtocell cell_ld. The storing module is a non volatile memory. Of course the storing module might be a flash memory, wherein the cell_id might be managed and updated by the cell operator. According to the embodiment, the femtocell is a standalone device. Of course the femtocell could be comprised in another device such as a residential gateway device. The femtocell device also comprises a processor 21 that is adapted to execute the algorithm of the embodiment.

According to the embodiment, the femtocell comprises a power control module 26. It is adapted to activate or deactivate the femtocell. When activated, the femtocell provides cellular functions in the pico cell. When deactivated, the cellular function of the femtocell is shut down; the femtocell is however still connected to the broadband network to receive among others instructions from the access concentrator to activate the pico cell.

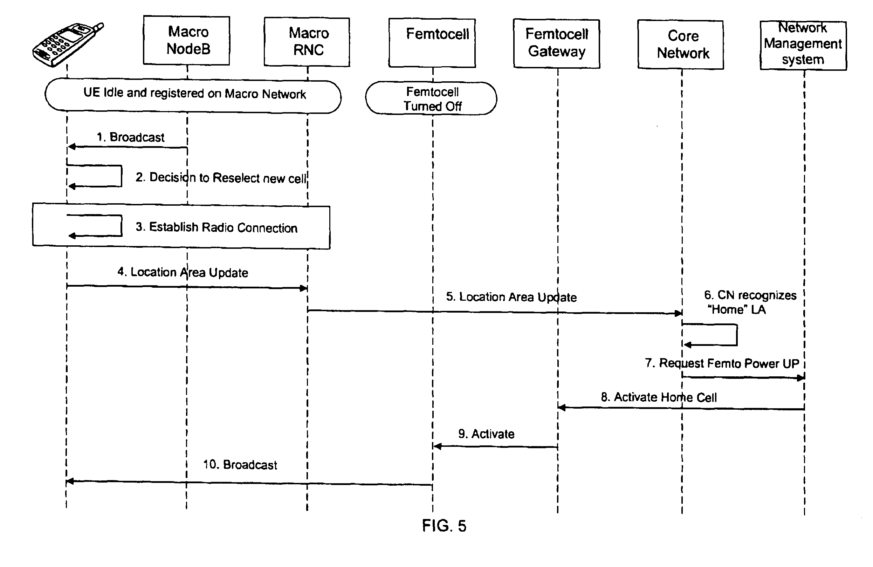

The method for activating a femtocell is indicated in figure 5.
Step 1. The handset is registered in the macronetwork. It receives the broadcast channel from at least one cell of the macronetwork. The femtocell is turned off for power saving reasons.
Step 2. Through the normal process of radio frequency measurements carried out by the handset, the handset decides to reselect to another radio cell (NodeB).
Step 3. The handset establishes a signaling connection with the network via the newly selected NodeB.
Step 4. The new cell is in a Location Area different from the previous cell. Therefore, the handset informs the Mobile Core Network of the change of Location Area by sending a Location Area Update message containing the new Location Area code.
Step 5. The Macro RNC forwards the Location Area Update message to the CN.
Step 6. The CN recognizes that the handset has now entered its "home" location area. As indicated hereinabove, the CN comprises detecting means for identifying the home location area for each handset.
Step 7. The CN requests the Network Management System to activate the femtocell of the handset owner. A request message, which is an Attribute Value Change event according to the ITU-T recommendation X.731 (01/1992) section 7.1.1 on Operational State, is sent from the CN towards the mobile operator's Network Management System. An object model, which is compliant with ITU-T recommendation X.700 (09/1992) section 5.5.4 on configuration management, and with DSL forum TR-069, is an object representing the femtocell; where the identity is defined by the user's International Mobile Subscriber Identity, IMSI, with an attribute "isHome" which takes Boolean values true or false.
Step 8. The Network Management System matches the handset owner's records, the IMSI, to his femtocell identity and uses the remote management interface of the femtocell to instruct the device to wake up, reinitialize and begin to broadcast. In particular, it sends a message according to the DSL-Forum TR-069 specification. The TR-069 is specified in "DSL Forum Technical Report, TR-069 Amendment 1, CPE WAN Management Protocol, dated November 2006". The TR-069 SetParameterValues is a method defined in chapter A.3.2.1 of TR-069. It is usually used to modify the value of one or more customer premise equipment parameters. According to the embodiment, the femtocell comprises a parameter which is the PowerState. It may take values "On" and "Off". To instruct the device to wake up, reinitialize and begin to broadcast, the TR-069 message consists of a TR-069 SetParameterValues method containing the name-value pair (InternetGatewayDevice.Devicelnfo.PowerState, "On").
Step 9. The AC node forwards the activation message to the correct Femtocell (or a local management agent which is responsible for activating the Femtocell).
Step 10. The femtocell is activated. The femtocell initializes and begins to transmit the broadcast channel. The handset will detect the presence of the femtocell broadcast when it comes into range. Of course, if the femtocell is already active, the reception of that message doesn't impact the femtocell.

The same method is applied to shutdown a femtocell. On detection that a handset left a location area, the CN requests the Network Management System to deactivate the femtocell of the handset owner. The same messages as above are used; where the isHome attribute is set to false, and the SetParameterValues method contains the name-value pair (InternetGatewayDevice.Devicelnfo.PowerState, "Off").

Of course, more than one handset may be registered to a femtocell. The femtocell records the handsets that are present either in the femtocell or in the location area. Presence in the femtocell is detected at the femtocell. Presence in the location area is indicated by the message received as indicated hereinabove. Alternatively, that message comprises an indication of the handset identifier, so that the femtocell is made aware of the handset identity. It permits the femtocell to clearly track the handsets present in the location area and in the femtocell.

When a handset leaves a location area, the femtocell is not always deactivated. On reception of the deactivation message, the femtocell checks whether another handset is still present in the location area or in the femtocell. If another handset is still present the femtocell is not deactivated. If no handset is present in the femtocell and in the location area, the femtocell is deactivated.

Alternatively, a handset may be configured as the master handset. When that handset leaves a location area, the femtocell is always deactivated, even if another handset is still present in the location area or in the femtocell.

According to a variant embodiment, the femtocell is located into a residential gateway. The activation and deactivation applies to the residential gateway device together with the femtocell. When the handset enters the location area, activation is not limited to the femtocell, but also to other residential gateway functions. The other residential gateway functions are functions at the residential gateway that can be activated and deactivated, such as among other the local area network, the voice over IP service. The selection of these functions can be performed locally at the residential gateway device, through the residential gateway user interface. Of course they can also be remotely configured. When an end user enters his location area, the residential gateway functions are consequently activated before the end user enters his home. In the same manner, the functions are deactivated when the end user leaves the location area.

In a further embodiment, the set of functions that are activated and deactivated is configured per handset. More than one handset is registered to a femtocell. Activation and deactivation then depends on the handset. Each handset sets up activation and deactivation of a different set of functions. Again this is configurable locally at the residential gateway or remotely in a manner that is out of the scope of the embodiment. This embodiment can be illustrated as follows. Two handsets are registered to a femtocell, the father handset and the child handset. Both handsets are configured to activate and deactivate the femtocell. Only the father handset is configured to activate and deactivate the residential WiFi network managed at the residential gateway. When the father handset enters the location area, the femtocell is activated and the WiFi network is activated. When the child handset enters the location area, the femtocell is activated. The WiFi is not automatically activated.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. A method for activating a first network comprising the steps of:
- detecting (4, 5) a mobile handset reselecting from a first macrocell to a second macrocell;
- identifying (6) that said mobile handset has been registered to a first network that is located in said second macrocell; and
- activating (8, 9) said first network.

2. Method according to claim 1, said first network being a femtocell.

3. Method according to any one of the preceding claims, comprising the step of activating at least a function of a home gateway to which said femtocell is connected.

4. A method for deactivating a first network comprising the steps of:
- detecting a mobile handset reselecting from a first macrocell to a second macrocell;
- identifying that said mobile handset has been registered to a first network that is located in said first macrocell; and
- deactivating said first network.

5. Method according to claim 4, said first network being a femtocell.

6. Method according to claim 4 or 5, comprising the step of deactivating at least a function of a home gateway to which said femtocell is connected.

7. Femtocell (3) comprising power control means (26) for activating said femtocell on reception of an instruction from a femtocell gateway, when a mobile handset enters the macrocell to which said femtocell has been registered.

8. Femtocell (3) according to claim 7, said power control means (26) deactivating said femtocell on reception of an instruction from a femtocell gateway, when a mobile handset leaves the macrocell to which said femtocell has been registered.

9. Home Gateway (15) device comprising a femtocell module (3), said gateway comprising a power control means (26) for activating a set of functions on reception of an instruction from a femtocell gateway, when a mobile handset enters the macrocell to which said femtocell has been registered.

10. Home Gateway (15) device according to claim 9, said set of functions being configurable per mobile handset registered to said femtocell.
